# EUROPÄISCHE PATENTSCHRIFT

(11) **EP 2 282 137 B1**
(45) Veröffentlichungstag und Bekanntmachung des Hinweises auf die Patenterteilung: **29.05.2013**
(21) Anmeldenummer: 10007375.8
(22) Anmeldetag: 16.07.2010
(51) Int. Cl.: B60H 1/00

(54) **Wärmetauschereinheit mit Luftstromlenkungselementen**
Heat exchanger unit with air flow directing elements
Unité d'échangeur thermique comprenant des éléments de direction de flux d'air

(30) Priorität: 04.08.2009 DE 202009010548 U
(43) Veröffentlichungstag der Anmeldung: 09.02.2011
(73) Patentinhaber: Blum, Theodor, 79189 Bad Krozingen (DE)
(72) Erfinder: Blum, Theodor, 79189 Bad Krozingen (DE)
(74) Vertreter: Zimmermann, Günter

(56) Entgegenhaltungen:
- WO-A1-01/69154
- WO-A1-2006/073232
- DE-A1- 10 013 689

## Beschreibung

Die Erfindung bezieht sich auf eine Wärmetauschereinheit mit den Merkmalen des Oberbegriffs des Anspruchs 1.

Eine derartige Wärmetauschereinheit ist durch das deutsche Gebrauchsmuster 91 10 870.5 bekannt. Die Wärmetauschereinheit wird in einem Klimagerät für ein Kraftfahrzeug verwendet, wobei ein Luftstromlenkungselement in Form einer Luftklappe vorgesehen ist, mit welcher die Frischluftzufuhr und die Warmluftzufuhr gesteuert werden. Durch die Stellung der Luftklappe kann entweder die Frischluftzufuhr oder die Warmluftzufuhr abgesperrt werden oder es kann eine Beimischung der Warmluft zur Frischluft erfolgen. Luftklappen haben den Nachteil, dass ein großer Strömungswiderstand gegeben ist und dass Strömungsgeräusche entstehen. Da die Luftklappe außerhalb des Wärmetauschers angeordnet ist, ist zusätzlich ein großer Platzbedarf erforderlich.

Ein weiterer Wärmetauscher ist durch die WO 2006/073232 A1 bekannt. Bei diesem Wärmetauscher sind vier einzelne Innenrohrsegmente vorgesehen, wobei jedes Innenrohrsegment bis zu zwei gegenüberliegende Einschnitte aufweist. Die Innenrohrsegmente sind in mehreren Schritten von 90° gegenüber dem Außenrohrsegment drehbar. Die verschiedenen Stellungen bewirken eine Abgabe von Wärme eines warmen Luftstroms an ein Wärmetauscherelement bzw. eine Aufnahme von Wärme eines kalten Luftstroms von dem Wärmetauscherelement.

Eine Lüftungsvorrichtung ist durch die DE 100 13 689 A1 bekannt. Zur Einstellung verschiedener Be- und Entlüftungsstellungen sind zwei ineinander liegende Rohrabschnitte vorgesehen, deren Mantelflächen über den Umfang verteilte und in Deckungslage bringbare Öffnungen aufweisen.

Die Aufgabe der Erfindung wird somit darin gesehen, die Wärmetauschereinheit der eingangs genannten Art derart weiterzuentwickeln, dass eine kompakte Wärmetauschereinheit entsteht, bei welchem die Luftstromlenkungselemente einen geringen Strömungswiderstand aufweisen und welche kaum wahrnehmbare Geräusche verursachen. Zusätzlich soll dies mit konstruktiv einfachen Mitteln erreicht werden.

Zur Lösung dieser Aufgabe wird erfindungsgemäß vorgeschlagen, dass die Wärmetauschereinheit gemäß dem Oberbegriff des Anspruchs 1 entsprechend dem kennzeichnenden Teil dieses Anspruchs ausgebildet ist.

Bei der erfindungsgemäßen Wärmetauschereinheit sind die Drehschieber in der Wärmetauschereinheit integriert, so dass eine kompakte Wärmetauschereinheit entsteht, welche wenig Platz beansprucht. Die Drehschieber selbst haben durch ihre rohrförmige Ausbildung einen geringen Strömungswiderstand, so dass bei Betrieb praktisch keine Strömungsgeräusche entstehen. Durch die Stellung des Innenrohrsegments und des Außenrohrsegments zueinander wird die Lenkung der Luftströme bestimmt. Ein derartiger Drehschieber ist konstruktiv einfach herstellbar, da er lediglich aus zwei Rohrelementen aufgebaut ist.

Um mittels der Rohrsegmente eine offene Stellung und eine geschlossene Stellung des Drehschiebers zu definieren, sieht eine Ausbildung der Erfindung vor, dass das Innenrohrsegment und das Außenrohrsegment je einem in Längsrichtung teilweise halbierten Rohr mit einer 180°-Ummantelung entspricht. Bei einer deckungsgleichen Stellung des Innenrohrsegments und des Außenrohrsegments ist der Drehschieber geöffnet, während bei einer gegenüberstehenden Stellung des Innenrohrsegments zum Außenrohrsegment der Drehschieber geschlossen ist. Vorteilhafterweise ist in der geschlossenen Stellung des Drehschiebers das Innenrohrsegment zum Außenrohrsegment gegenüber der deckungsgleichen Stellung genau um 180° verdreht.

Bei den in dem Wärmetauscher integrierten Drehschiebern wird zwischen zwei unterschiedlichen Konstruktionen von Drehschiebern unterschieden. Es sind große Drehschieber und kleine Drehschieber vorgesehen. Bei dem großen Drehschieber entspricht die Länge des Innenrohrsegments vorteilhafterweise der Hälfte der Länge des Außenrohrsegments, während bei dem kleinen Drehschieber die Länge des Innenrohrsegments der Länge des Außenrohrsegments entspricht. Bei beiden Arten von Drehschiebern ist das Innenrohrsegment konzentrisch innerhalb des Außenrohrsegmentes angeordnet.

Je nach Bedarf kann eine unterschiedliche Anzahl der beiden Arten von Drehschiebern innerhalb des Wärmetauschers integriert sein. Zweckmäßigerweise sind an einer Stirnseite des Wärmetauschers drei Drehschieber vorgesehen, wobei zwischen zwei großen Drehschiebern ein kleiner Drehschieber angeordnet ist.

Die Erfindung wird nachstehend anhand der Zeichnung näher erläutert. Die Zeichnung zeigt ein Ausführungsbeispiel der Erfindung. Hierbei stellen dar:
Fig.1 eine Ansicht von Einzelteilen eines großen Drehschiebers, teilweise in Schnittdarstellung,
Fig.2 einen Längsschnitt durch einen großen Drehschieber gemäß Fig.1 in offener Stellung, zusammen mit einem Schnitt entlang der Linie B1-B1,
Fig.3 einen Längsschnitt durch einen großen Drehschieber gemäß Fig.1 in geschlossener Stellung, zusammen mit einem Schnitt entlang der Linie B3-B3,
Fig.4 eine Ansicht von Einzelteilen eines kleinen Drehschiebers, teilweise in Schnittdarstellung,

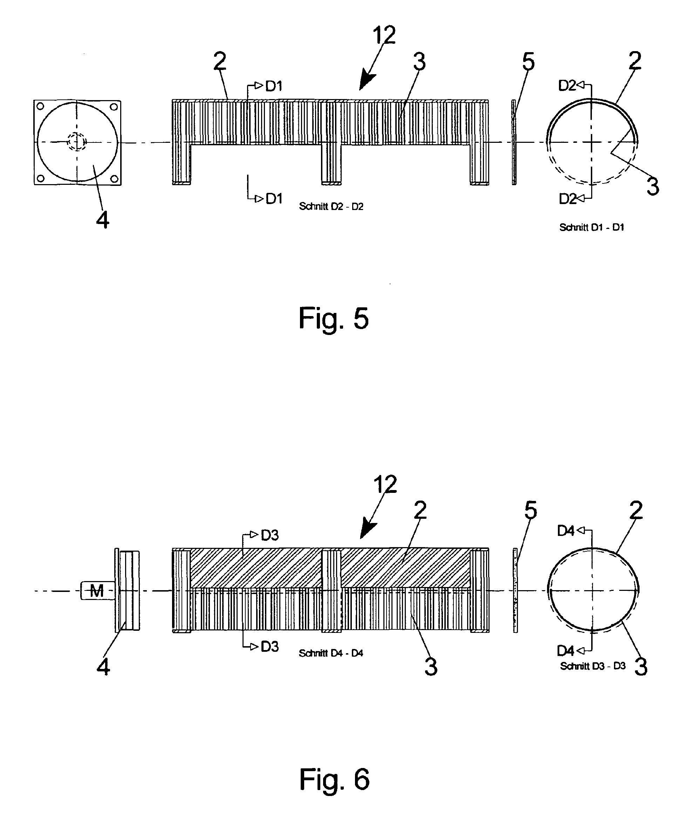

Fig.5 einen Längsschnitt durch einen kleinen Drehschieber gemäß Fig.4 in offener Stellung, zusammen mit einem Schnitt,
Fig.6 einen Längsschnitt durch einen kleinen Drehschieber gemäß Fig.4 in geschlossener Stellung, zusammen mit einem Schnitt,
Fig.7 einen Schnitt durch den erfindungsgemäßen Wärmetauscher mit eingezeichneten Luftströmen und mit den großen Drehschiebern in offener Stellung,
Fig.8 einen Schnitt entlang der Linie F1-F1 in Fig.7,
Fig.9 einen Schnitt entlang der Linie E1-E1 in Fig.7,
Fig.10 einen Schnitt durch den erfindungsgemäßen Wärmetauscher mit eingezeichneten Luftströmen und mit den großen Drehschiebern in geschlossener Stellung,
Fig.11 einen Schnitt entlang der Linie F2-F2 in Fig.10,
Fig.12 einen Schnitt entlang der Linie E2-E2 in Fig.10,
Fig.13 einen Schnitt durch den erfindungsgemäßen Wärmetauscher mit den kleinen Drehschiebern in offener Stellung,
Fig.14 einen Schnitt entlang der Linie G-G in Fig.13,

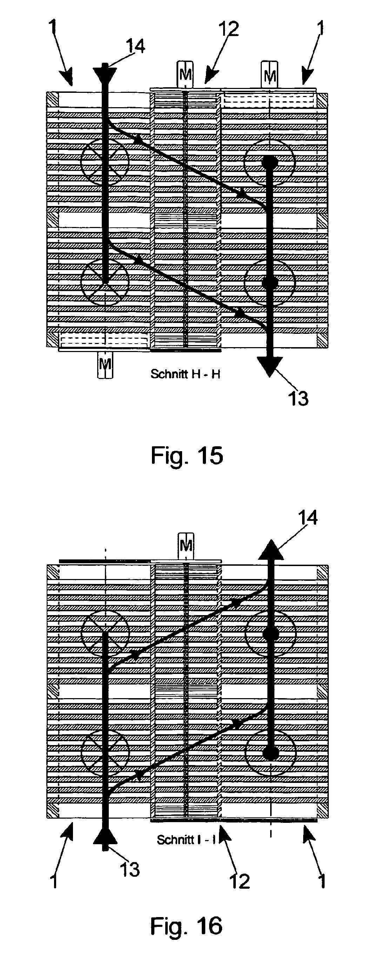

Fig.15 einen Schnitt entlang der Linie H-H in Fig.13 und
Fig.16 einen Schnitt entlang der Linie I-I in Fig.13.

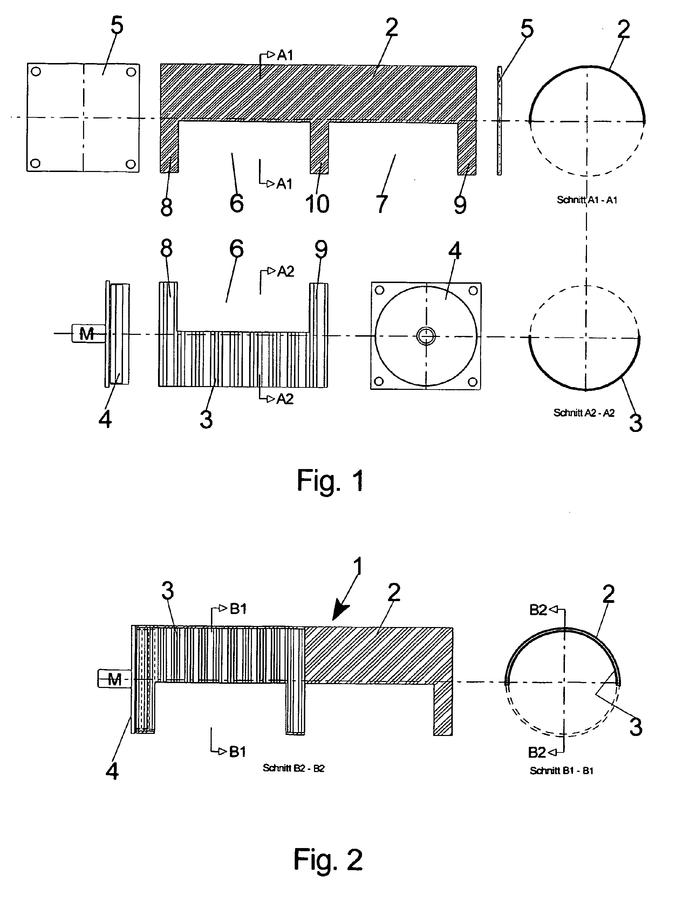

Der in Fig.1 in Einzelteilen gezeigte Drehschieber 1 besteht aus einem Außenrohrsegment 2, einem Innenrohrsegment 3, einer elektrischen Antriebseinheit 4 und einem Verschlussdeckel 5. Das Außenrohrsegment 2 kann aus Metall oder Kunststoff hergestellt sein und wird aus einem Rohr derart ausgeschnitten, dass im Bereich eines ersten Einschnitts 6 und eines zweiten Einschnitts 7 das Rohr in Längsrichtung halbiert wird, um im Bereich der beiden Einschnitte 6, 7 ein Halbrohr mit einer 180°-Ummantelung wie in Fig.1 gezeigt zu bilden. Durch die beiden Einschnitte 6, 7 bleiben noch ein erster Rohrendabschnitt 8, ein zweiter Rohrendabschnitt 9 und ein Rohrmittelabschnitt 10 mit einer vollen 360°-Ummantelung übrig. Diese Rohrabschnitte 8, 9, 10 werden teilweise als Befestigung in dem Wärmetauscher 11, welcher ein Gegenstromwärmetauscher ist, verwendet. In gleicher Weise wird das Innenrohrsegment 3 hergestellt, wobei allerdings die Länge des Innenrohrsegments 3 der Hälfte der Länge des Außenrohrsegments 2 entspricht und somit nur ein erster Einschnitt 6 gemacht wird. Mit einer vollen 360°-Ummantelung bleiben bei dem Innenrohrsegment 3 der erste Rohrendabschnitt 8 und der zweite Rohrendabschnitt 9 übrig. Der Durchmesser des Innenrohrsegments 3 ist etwas kleiner als der Durchmesser des Außenrohrsegments 2, so dass bei der weiteren Fertigung das Innenrohrsegment 3 in das Außenrohrsegment 2 geschoben werden kann, wobei sich in der Endstellung der erste Rohrendabschnitt 8 des Außenrohrsegments 2 mit dem ersten Rohrendabschnitt 8 des Innenrohrsegments 3 überlappt und der Rohrmittelabschnitt 10 des Außenrohrsegments 2 mit dem zweiten Rohrendabschnitt 9 des Innenrohrsegments 3 überlappt. An der einen Stirnseite des Drehschiebers wird dann die elektrische Antriebseinheit 4 angebracht und die andere Stirnseite des Drehschiebers 1 bleibt offen. Dieser Typ des Drehschiebers 1 wird als großer Drehschieber 1 bezeichnet.

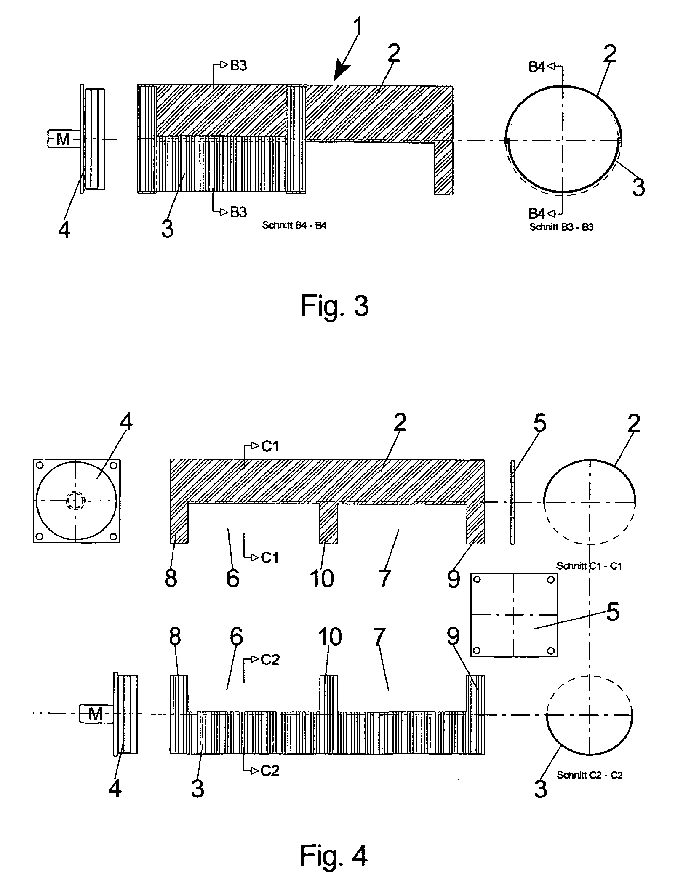

Fig.2 zeigt die offene Stellung des großen Drehschiebers 1, wobei sich die konzentrisch angeordneten Halbrohre des Außenrohrsegments 2 und des Innenrohrsegments 3 deckungsgleich überlappen. Im Bereich des ersten Einschnitts 6 ist der Drehschieber 1 nun offen. Wird das Innenrohrsegment 3 aus der deckungsgleichen Stellung um 180° gegenüber dem Außenrohrsegment 2 gedreht, dann stehen sich die beiden Halbrohre des Außenrohrsegments 2 und des Innenrohrsegments 3 gegenüber und der Drehschieber 1 befindet sich in der geschlossenen Stellung, wie in Fig.3 gezeigt, da der Bereich des ersten Einschnitts 6 nun verschlossen ist.

Der in Fig.4 in Einzelteilen gezeigte Drehschieber 12 wird als kleiner Drehschieber bezeichnet. Dieser kleine Drehschieber wird in gleicher Weise wie der große Drehschieber 1 hergestellt, allerdings mit dem Unterschied, dass die Länge des Innenrohrsegments 3 der Länge des Außenrohrsegments 2 entspricht. Somit weist das Innenrohrsegment 3 ebenfalls zwei Einschnitte 6, 7 wie das Außenrohrsegment 2 auf. An der einen Stirnseite ist bei diesem Drehschieber 12 die elektrische Antriebseinheit 4 und gegenüber, im Gegensatz zum Drehschieber 1, immer der Verschlussdeckel 5 angeordnet. Das Funktionsprinzip ist dasselbe wie bei dem großen Drehschieber 1. Durch Drehung des Innenrohrsegments 3 gegenüber dem Außenrohrsegment 2 um 180° wird der kleine Drehschieber 12 von einer geöffneten Stellung in eine geschlossene Stellung gebracht, wobei im Gegensatz zu dem großen Drehschieber 1 der kleine Drehschieber 12 im Bereich der beiden Einschnitte 6, 7 verschlossen ist.

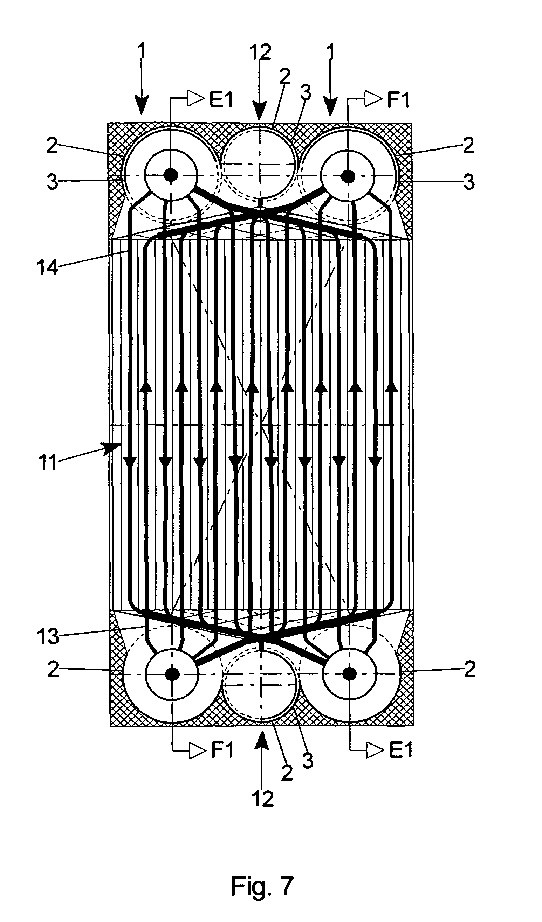

Fig.7 zeigt einen Schnitt durch den Wärmetauscher 11, wobei an einer Stirnseite des Wärmetauschers 11 zwei große Drehschieber 1 und dazwischen ein kleiner Drehschieber 12 angeordnet sind. An der anderen Stirnseite des Wärmetauschers 11 sind keine vollständigen großen Drehschieber 1 sondern lediglich zwei Außenrohrsegmente 2 wie bei dem großen Drehschieber 1 vorgesehen. Jedes Außenrohrsegment 2 ist an einer Stirnseite mit einem Verschlussdeckel 5 verschlossen. Dazwischen befindet sich ein kleiner Drehschieber 12. Zwischen den Drehschiebern 12 und dem Wärmetauscher 11 ist je eine isolierende Zwischenplatte vorgesehen, die die beiden Wärmetauscherhälften trennt.

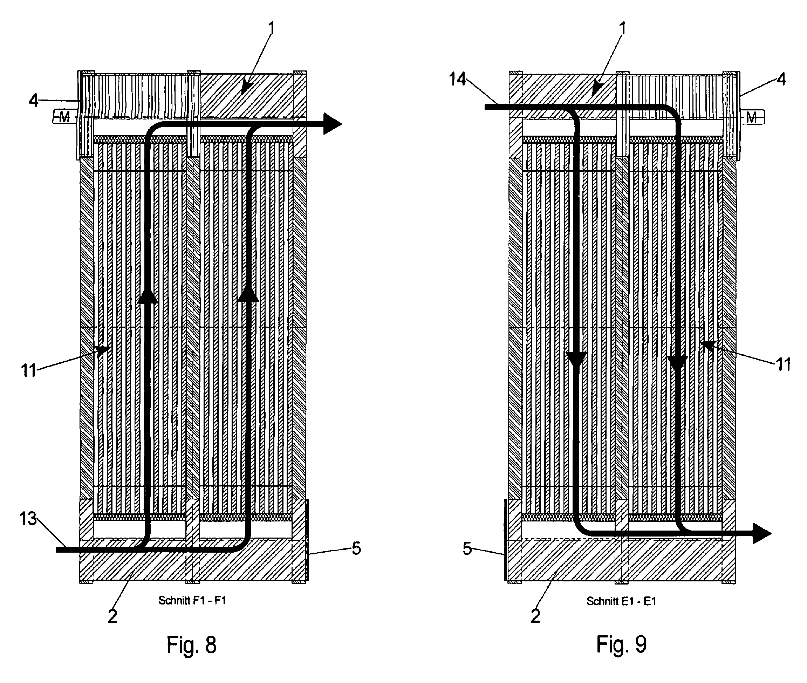

Fig.8 und Fig.9 zeigen den normalen Wärmetauscherbetrieb. Ein erster Luftstrom 13 tritt gegenüber dem Verschlussdeckel 5 in eines der Außenrohrsegmente 2 ein und strömt durch die Luftzüge einer ersten und zweiten Ebene des Wärmetauschers 11 in einen der großen Drehschieber 1. Das Innenrohrsegment 3 des großen Drehschiebers 1 ist so gedreht, dass das Innenrohrsegment 3 und das Außenrohrsegment 2 deckungsgleich sind, so dass der Drehschieber 1 geöffnet ist und der erste Luftstrom 13 ungehindert durch den Drehschieber 1 gegenüber der Antriebseinheit 4 austreten kann. Der zweite Luftstrom 14 tritt gegenüber der Antriebseinheit 4 in das Innenrohrsegment 3 des anderen großen Drehschiebers 1. Das Innenrohrsegment 3 ist so gedreht, dass es deckungsgleich mit dem Außenrohrsegment 2 ist, so dass der Drehschieber 1 geöffnet ist. Der zweite Luftstrom 14 strömt somit entgegen dem ersten Luftstrom 13 durch die Luftzüge der ersten und zweiten Ebene des Wärmetauschers 11 und weiter in das andere Außenrohrsegment 2 und tritt dann durch die Öffnung gegenüber dem Verschlussdeckel 5 aus. Hierdurch ergibt sich eine fast vollständige Temperaturübertragung von dem ersten Luftstrom 13 zu dem zweiten Luftstrom 14.

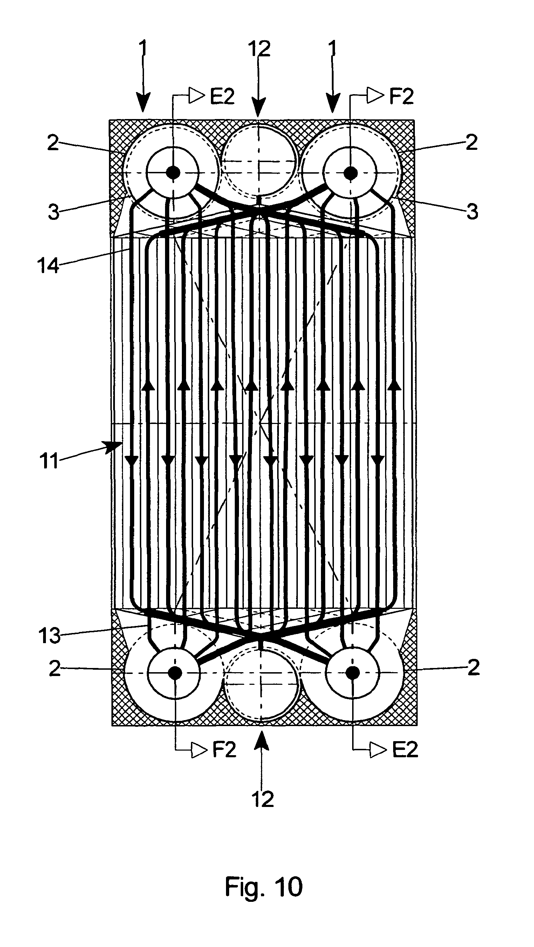

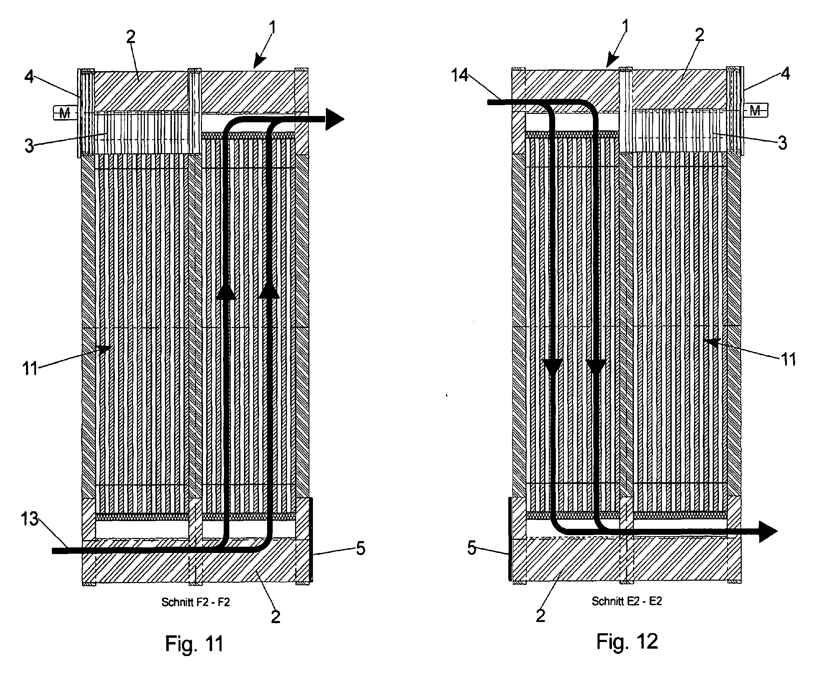

Fig.10 bis Fig.12 zeigen die Vermeidung von Temperaturübertragung von dem ersten Luftstrom 13 zu dem zweiten Luftstrom 14. Die beiden großen Drehschieber 1 sind auf halber Länge geschlossen, indem die jeweiligen Innenrohrsegmente 3 um 180° gegenüber den entsprechenden Außenrohrsegmenten 2 gedreht sind. Der erste Luftstrom 13 tritt nun zwar unverändert durch die Öffnung in das Außenrohrsegment 2 ein, kann jetzt aber nur durch die Luftzüge der ersten Ebene des Wärmetauschers 11 in das Außenrohrsegment 2 streichen und durch die Öffnung gegenüber der Antriebseinheit 4 austreten. Der zweite Luftzug 14 tritt gegenüber der Antriebseinheit 4 in das Außenrohrsegment 2 des Drehschiebers 1 ein und kann nur noch durch den Bereich des offenen Einschnitts in die Luftzüge der zweiten Ebene des Wärmetauschers 11 strömen und durch das Außenrohrsegment 2 gegenüber dem Verschlussdeckel 5 wieder austreten. Es findet kein Wärmeaustausch statt. Diese Funktion ist vorteilhaft, wenn abends die Außentemperatur unter die gewünschte Raumtemperatur absinkt. Dadurch kann die Nachtkühle ohne nennenswerten Energieaufwand zur Raumkühlung beitragen. Für den vorstehend beschriebenen normalen Wärmetauscherbetrieb und den Betrieb zur Vermeidung von Temperaturübertragung von dem ersten Luftstrom 13 zu dem zweiten Luftstrom 14 sind die beiden kleinen Drehschieber 12 geschlossen.

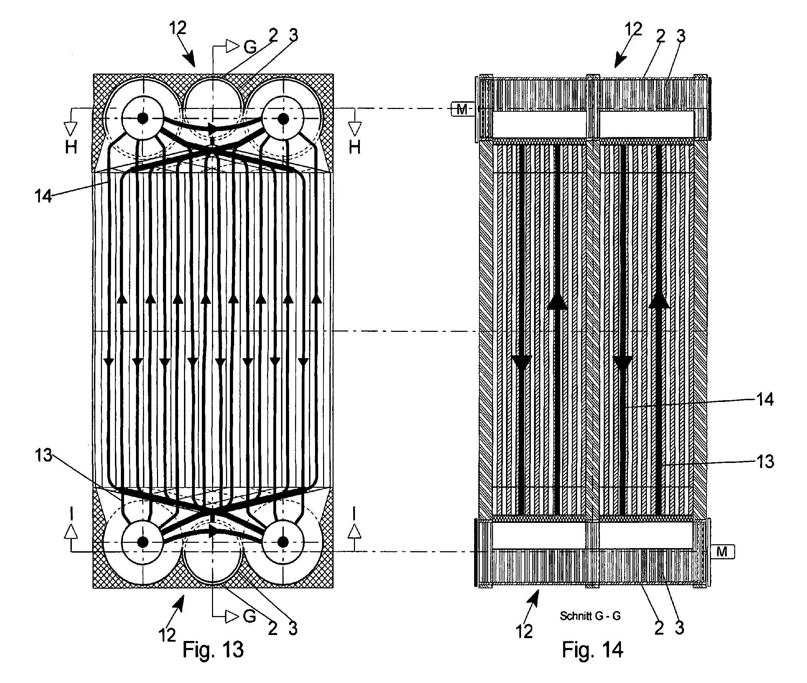

Wenn die beiden kleinen Drehschieber 12 geöffnet sind, dann kann vom ersten Luftstrom 13 ein Teil dem zweiten Luftstrom 14 zugeführt werden. Diese Funktion ist in einem Klimagerät von Vorteil, wenn die Außentemperatur höher ist als die gewünschte Raumtemperatur und die in dem Klimagerät in Luftströmungsrichtung folgende Peltier-Wärmepumpe im Kühlbetrieb arbeitet. Um den höheren Wärmeanteil abzuführen, der jetzt auf der Kaltseite der Peltier-Wärmepumpe entsteht, ist es vorteilhaft, dem als zweiter Luftstrom 14 wirkender Abluftstrom so viel Außenluft über diesen Bypaß beizugeben, dass mit dem größerem Luftstromvolumen die größere Wärmemenge aufgenommen werden kann und als Fortluft ins Freie getragen wird. Dadurch verbessert sich die Kühlleistung auf der Warmseite der Peltier-Wärmepumpe alleine durch Anheben der Luftleistung durch einen Ventilator. Durch Öffnen und Schließen des kleinen Drehschiebers 12 kann die Bypaßmenge stufenlos dem optimalen Bedarf angepasst werden. Währenddessen ist der andere kleine Drehschieber 12 geschlossen. In Fig.13 ist dargestellt, wie vom Abluftstrom ein Teil dem Außenluftstrom zugeführt wird. Dies ist vorteilhaft zum Aufnehmen der größeren Wärmemenge auf der Warmseite der Peltier-Wärmepumpe im Heizbetrieb und wird als Zuluft dem Raum zugeführt. Nur durch Erhöhen der Förderleistung eines Ventilators im Klimagerät wird so die Heizleistung deutlich verbessert. Durch stufenloses Verstellen des Innenrohrsegments 3 kann das Volumen des ersten Luftstroms 13 für den Wärmetransport als Zuluft optimiert werden. Der Anteil Abluft, der als Bypaß dem Luftstrom 13 zugeführt wird, ist dadurch im Umluftbetrieb. Währenddessen ist der kleine Drehschieber 12 geschlossen.

Die erfindungsgemäße Wärmetauschereinheit mit Luftstromlenkungselementen ist kompakt gebaut und ermöglicht zusätzlich eine kompakte Bauweise von Lüftungs-, Heiz- und Klimageräten. Ein weiterer Vorteil ist der geringe Luftwiderstand der Luftstromlenkungselemente und damit die Vermeidung von Strömungsgeräuschen.

## Patentansprüche

1. Wärmetauschereinheit für ein Klimagerät eines Kraftfahrzeuges zur Wärmeübertragung von einem ersten Luftstrom zu einem zweiten Luftstrom mit einem Wärmetauscher (11) und Luftstromlenkungselementen (1, 12),
**dadurch gekennzeichnet,**
**dass** die Luftstromlenkungselemente Drehschieber (1,12) sind, welche unmittelbar an den beiden als Lufteintrittsseite und Luftaustrittsseite wirkenden Stirnseiten des Wärmetauschers (11) angeordnet sind, so dass die Drehschieber in die Wärmetauschereinheit integriert sind, wobei jeder Drehschieber (1,12) aus einem Außenrohrsegment (2) und einem gegenüber dem Außenrohrsegment (2) drehbaren Innenrohrsegment (3) besteht.

2. Wärmetauschereinheit nach Anspruch 1,
**dadurch gekennzeichnet,**
**dass** das Innenrohrsegment (3) und das Außenrohrsegment (2) je einem in Längsrichtung teilweise halbierten Rohr mit einer 180°-Ummantelung entsprechen.

3. Wärmetauschereinheit nach Anspruch 1 oder 2,
**dadurch gekennzeichnet,**
**dass** bei einer deckungsgleichen Stellung des Innenrohrsegments (3) und des Außenrohrsegments (2) der Drehschieber (1,12) geöffnet ist.

4. Wärmetauschereinheit nach einem der vorhergehenden Ansprüche,
**dadurch gekennzeichnet,**
**dass** bei einer gegenüberstehenden Stellung des Innenrohrsegments (3) zum Außenrohrsegment (2) der Drehschieber (1,12) geschlossen ist.

5. Wärmetauschereinheit nach einem der Ansprüche 3 oder 4,
**dadurch gekennzeichnet,**
**dass** in geschlossener Stellung des Drehschiebers (1,12) das Innenrohrsegment (3) zum Außenrohrsegment (2) gegenüber der deckungsgleichen Stellung um 180° verdreht ist.

6. Wärmetauschereinheit nach einem der vorhergehenden Ansprüche,
**dadurch gekennzeichnet,**
**dass** das Innenrohrsegment (3) konzentrisch innerhalb des Außenrohrsegments (2) angeordnet ist.

7. Wärmetauschereinheit nach einem der vorhergehenden Ansprüche,
**dadurch gekennzeichnet,**
**dass** die Länge des Innenrohrsegments (3) der Länge des Außenrohrsegments (2) entspricht.

8. Wärmetauschereinheit nach einem der vorhergehenden Ansprüche 1 bis 6,
**dadurch gekennzeichnet,**
**dass** die Länge des Innenrohrsegments (3) der Hälfte der Länge des Außenrohrsegments (2) entspricht.

9. Wärmetauschereinheit nach einem der vorhergehenden Ansprüche,
**dadurch gekennzeichnet,**
**dass** an einer ersten Stirnseite des Wärmetauschers (11) drei Drehschieber (1,12) angeordnet sind.

10. Wärmetauschereinheit nach Anspruch 9,
**dadurch gekennzeichnet,**
**dass** die drei Drehschieber (1,12) zwei große Drehschieber (1) und ein kleiner Drehschieber (12) sind, wobei zwischen den zwei großen Drehschiebern (1) der kleine Drehschieber (12) angeordnet ist.

11. Wärmetauschereinheit nach einem der vorhergehenden Ansprüche,
**dadurch gekennzeichnet,**
**dass** an einer zweiten Stirnseite des Wärmetauschers (11) ein kleiner Drehschieber (12) angeordnet ist.

## Claims

1. Heat exchanger unit for an air conditioning system of a motor vehicle for transmitting heat from a first airflow to a second airflow with a heat exchanger (11) and airflow deflection elements (1, 12), **characterised in that** the airflow deflection elements (1, 12) are rotary slide valves (1, 12), which are arranged directly on the two end faces of the heat exchanger (11) acting as an air inlet side and air outlet side, so the rotary slide valves are integrated in the heat exchanger unit, each rotary slide valve (1, 12) consisting of an outer tube segment (2) and an inner tube segment (3) that can be rotated relative to the outer tube segment (2).

2. Heat exchanger unit according to claim 1, **characterised in that** the inner tube segment (3) and the outer tube segment (2) each correspond to a tube, which is partially halved in the longitudinal direction, with a 180° sheathing.

3. Heat exchanger unit according to claim 1 or 2, **characterised in that** the rotary slide valve (1, 12) is opened in a congruent position of the inner tube segment (3) and the outer tube segment (2).

4. Heat exchanger unit according to any one of the preceding claims, **characterised in that** the rotary slide valve (1, 12) is closed in an opposing position of the inner tube segment (3) with respect to the outer tube segment (2).

5. Heat exchanger unit according to either of claims 3 or 4, **characterised in that** the inner tube segment (3) is rotated with respect to the outer tube segment (2) through 180° relative to the congruent position in the closed position of the rotary slide valve (1, 12).

6. Heat exchanger unit according to any one of the preceding claims, **characterised in that** the inner tube segment (3) is arranged concentrically within the outer tube segment (2).

7. Heat exchanger unit according to any one of the preceding claims, **characterised in that** the length of the inner tube segment (3) corresponds to the length of the outer tube segment (2).

8. Heat exchanger unit according to any one of the preceding claims 1 to 6, **characterised in that** the length of the inner tube segment (3) corresponds to half the length of the outer tube segment (2).

9. Heat exchanger unit according to any one of the preceding claims, **characterised in that** three rotary slide valves (1, 12) are arranged on a first end face of the heat exchanger (11).

10. Heat exchanger unit according to claim 9, **characterised in that** the three rotary slide valves (1, 12) are two large rotary slide valves (1) and one small rotary slide valve (12), the small rotary slide valve (12) being arranged between the two large rotary slides valves (1).

11. Heat exchanger unit according to any one of the preceding claims, **characterised in that** a small rotary slide valve (12) is arranged on a second end face of the heat exchanger (11).

## Revendications

1. Unité d'échange thermique pour un appareil de climatisation d'un véhicule, pour le transfert de chaleur d'un premier écoulement d'air à un deuxième écoulement d'air, comprenant un échangeur thermique (11) et des éléments de guidage d'écoulement d'air (1, 12),
**caractérisée en ce**
**que** les éléments de guidage d'écoulement d'air sont des tiroirs rotatifs (1, 12) qui sont disposées directement sur les deux côtés frontaux faisant fonction de côté d'entrée d'air et côté de sortie d'air de l'échangeur thermique (11), de sorte que les tiroirs rotatifs sont intégrés dans l'unité d'échange thermique, chaque tiroir rotatif (1, 12) étant composé d'un segment de tube extérieur (2) et d'un segment de tube intérieur (3) pouvant tourner par rapport au segment de tube extérieur (2).

2. Unité d'échange thermique selon la revendication 1,
**caractérisée en ce**
**que** le segment de tube intérieur (3) et le segment de tube extérieur (2) correspondent chacun à un tube partiellement divisé en deux dans la direction longitudinale, avec un gainage sur 180°.

3. Unité d'échange thermique selon la revendication 1 ou 2,
**caractérisée en ce**
**que** le tiroir rotatif (1, 12) est ouvert lorsque le segment de tube intérieur (3) et le segment de tube extérieur (2) sont dans une position coïncidente.

4. Unité d'échange thermique selon une des revendications précédentes,
**caractérisée en ce**
**que** le tiroir rotatif (1, 12) est fermé lorsque le segment de tube intérieur (3) et le segment de tube extérieur (2) sont dans une position opposée.

5. Unité d'échange thermique selon une des revendications 3 ou 4,
**caractérisée en ce**
**que** dans la position fermée du tiroir rotatif (1, 12), le segment de tube intérieur (3) est tourné de 180° par rapport au segment de tube extérieur (2) comparé à la position coïncidente.

6. Unité d'échange thermique selon une des revendications précédentes,
**caractérisée en ce**
**que** le segment de tube intérieur (3) est disposé concentriquement à l'intérieur du segment de tube extérieur (2).

7. Unité d'échange thermique selon une des revendications précédentes,
**caractérisée en ce**
**que** la longueur du segment de tube intérieur (3) correspond à la longueur du segment de tube extérieur (2).

8. Unité d'échange thermique selon une des revendications précédentes 1 à 6,
**caractérisée en ce**
**que** la longueur du segment de tube intérieur (3) correspond à la moitié de la longueur du segment de tube extérieur (2).

9. Unité d'échange thermique selon une des revendications précédentes,
**caractérisée en ce**
**que** trois tiroirs rotatifs (1, 12) sont disposés sur un premier côté frontal de l'échangeur thermique (11).

10. Unité d'échange thermique selon la revendication 9,
**caractérisée en ce**
**que** les trois tiroirs rotatifs (1, 12) sont deux grands tiroirs rotatifs (1) et un petit tiroir rotatif (12), le petit tiroir rotatif (12) étant disposé entre les deux grands tiroirs rotatifs (1).

11. Unité d'échange thermique selon une des revendications précédentes,
**caractérisée en ce**
**qu'**un petit tiroir rotatif (12) est disposé sur un deuxième côté frontal de l'échangeur thermique (11).
